# EUROPÄISCHE PATENTSCHRIFT

(11) **EP 1 859 259 B1**
(45) Veröffentlichungstag und Bekanntmachung des Hinweises auf die Patenterteilung: **20.02.2013**
(21) Anmeldenummer: 06722606.8
(22) Anmeldetag: 14.03.2006
(51) Int. Cl.: G01N 25/66, G01N 27/22, H01L 21/768, H01L 23/48

(54) **VORRICHTUNG, INSBESONDERE ZUR MESSUNG DER FEUCHTE, MIT KORROSIONSGESCHÜTZTEN ANSCHLÜSSEN**
DEVICE, IN PARTICULAR, FOR MEASURING HUMIDITY, COMPRISING CORROSION-PROTECTED CONNECTIONS
DISPOSITIF UTILISE EN PARTICULIER POUR MESURER L'HUMIDITE, COMPRENANT DES CONNEXIONS PROTEGEES CONTRE LA CORROSION

(30) Priorität: 14.03.2005 DE 102005011588
(43) Veröffentlichungstag der Anmeldung: 28.11.2007
(73) Patentinhaber: CIS Forschungsinstitut für Mikrosensorik und Photovoltaik GmbH, 99099 Erfurt (DE)
(72) Erfinder: STEINKE, Arndt, 99192 Ingersleben (DE); NIELAND, Dr. Sabine, 99867 Gotha (DE); BROKMANN, Geert, 98693 Ilmenau (DE); MARCH, Barbara, 99102 Waltersleben (DE); GÖRBING, Klaus-Peter, 99092 Erfurt (DE)
(74) Vertreter: Liedtke, Klaus
(86) Internationale Anmeldenummer: PCT/DE2006/000449
(87) Internationale Veröffentlichungsnummer: WO 2006/097078

(56) Entgegenhaltungen:
- EP-A- 0 174 712
- DE-C1- 10 205 026
- FR-A- 2 829 626
- US-A1- 2002 074 637
- US-B1- 6 756 304

## Beschreibung

Die Erfindung betrifft eine Vorrichtung zur Messung eines Parameters eines Fluids, wobei ein elektrischer Sensor auf einer Oberfläche eines Substrats angeordnet und mit hinter der Oberfläche des Substrats angeordneten, elektrisch voneinander isolierten Leitungen kontaktiert ist.

Bei Vorrichtungen zur Messung von Fluidparametern sind funktionsbedingt dynamische und stationäre thermische Zustände erforderlich, die eine Heizung und/oder Kühlung des Sensors und damit dessen Oberfläche erforderlich machen. Um eine hohe Zuverlässigkeit und Lebensdauer zu erreichen, ist eine gute Entkopplung zwischen der Ebene der unmittelbaren Detektion des Messmediums und der thermischen Kontaktierung erforderlich, was einer zuverlässigen elektrischen Kontaktierung dient. Insbesondere dort, wo die Sensoroberfläche direkt dem Messmedium ausgesetzt ist, sollte aus Zuverlässigkeitsgründen die Realisierung von elektrischen Kontakten vermieden werden.

Bei Vorrichtungen zur Feuchtemessung von Gasen mittels Tauspiegelhygrometer wird diese Anforderung beispielsweise erfüllt, indem Kondensation optisch auf der Vorderseite detektiert wird, während die thermische Ankopplung an ein Kühlelement separat über die Rückseite erfolgt.

Für Sensoren, die eine nichtelektrische Größe wie beispielsweise die Feuchte nicht optisch, sondern elektrisch messen, also kapazitiv, impedimetrisch oder konduktiv, und deswegen funktionsbedingt eine thermische Isolation beziehungsweise Kopplung erfordern, sind die entsprechenden Möglichkeiten begrenzt. Ein Problem bei diesen Vorrichtungen ist die Sicherung eines zuverlässigen elektrischen Kontaktes unter Beibehaltung eines zuverlässigen thermischen Kontaktes zur Umwelt, also sowohl zum Messmedium als auch zum sensorrelevanten Gefäßsystem.

Im Stand der Technik sind Taupunktsensoren mit Interdigitalkondensatoren, relative Feuchtesensoren mit sorptiven Sensorschichten, Gassensoren mit hybriden beziehungsweise integrierten Heizungen oder Kühlungen bekannt.

Beispielsweise zeigt DE 40 35 371 A1 einen kapazitiven Feuchtesensor, bestehend aus einem Kondensator mit wenigstens zwei die Elektroden bildenden metallischen Schichten, von welchen die eine auf einem elektrisch hoch isolierendem Träger angeordnet ist und die zweite, außen gelegene, wasserdampfdurchlässig ist, wobei zwischen den Elektroden ein feuchteempfindlicher Film aus Polyetherimid als Dielektrikum vorgesehen ist und auf dem den Kondensator tragenden Substrat ein in DünnschichtTechnik hergestellter Temperatursensor vorgesehen ist.

Des Weiteren wird durch DE 101 14 230 A1 eine Anordnung zur Detektion der Kondensation an Oberflächen durch Auswertung der Änderung der Dielektrizitätskonstante im Streufeld eines Kondensators beschrieben, bei der ein die Streufeldkapazität ermittelnder Betauungssensor unmittelbar auf einem elektrischen oder elektronischen Bauteil in einem Bereich hoher Wärmeleitfähigkeit angeordnet ist, wobei der Betauungssensor gegenüber dem elektrischen oder elektronischen Bauteil eine geringe Wärmekapazität und eine geringe Masse aufweist und die Elektroden der Betauungssensoren interdigital angeordnet sind , wobei der Abstand zwischen den Elektroden der Betauungssensoren annähernd konstant ist und zwischen 0,1 und 1000 µm beträgt.

Die beschriebenen Vorrichtungen weisen Vorderseitenkontakte auf. Damit sind diese Kontakte den teilweise kritischen Umweltbedingungen wie Korrosion, Kondensation und mechanischen Belastungen ausgesetzt. Analoges gilt für den Einsatz dieser elektrisch basierten Sensoren zur Kondensationsfrüherkennung. Gerade für diese Applikationen ist, auch wenn die Signalisierung vor der eigentlichen Kondensation erfolgen soll, diese nicht auszuschließen.

Taupunkt-/Kondensationssensoren beziehungsweise thermisch gesteuerte Sensoren müssen über ihre Rückseite in gutem thermischem Kontakt zu beispielsweise thermoelektrischen Bauelementen wie Peltierelementen, Heizelementen oder Unterlagen stehen, wobei die Oberfläche des Sensors eine durch ein solches Bauelement jeweils vorgegebene Temperatur annehmen soll, damit bei Unterschreiten der Taupunkttemperatur eine bevorstehende und/oder vorliegende Kondensation messbar ist. Der Nachteil liegt aber bisher darin, dass die Anschlusskontakte im Bereich der Sensorflächen der Korrosionsgefahr ausgesetzt sind.

Diesem Problem wird in der Regel mit einer geometrischen Vergrößerung des lateralen Abstandes zwischen den Anschlusskontakten und den unmittelbaren Sensorflächen begegnet. Vergrößerter Abstand bedeutet aber andererseits unter anderem größere Substratflächen, größere thermische Massen und in jedem Fall einen höheren Kostenaufwand.

Vorrichtungen mit elektrischen Durchkontaktierungen lösen das Problem nur partiell, da ein neues Problem auftritt, das in der rückseitigen Ebene besteht, wo sich nunmehr die elektrischen Kontakte und die thermische Kontaktierung befindet und im Stand der Technik mit einer deutlichen Vergrößerung der Chipfläche einhergeht, was einen ungünstigen Kompromissen darstellt.

Diesbezüglich beschreibt US 5 306 670 ein Verfahren zur Herstellung einer Multichip-Baugruppe umfassend die Schritte: Bereitstellen einer ersten und zweiten Substratschicht eines Polymermaterials, wobei die erste Substratschicht dünner ist als die zweite; Formen einer Mehrzahl von Vertiefungen in der ersten Substratschicht, die sich durch die erste Substratschicht erstrecken; Formen einer thermisch leitfähigen Schicht auf der Oberseite der zweiten Substratschicht; Formen einer elektrisch leitfähigen Schicht auf der Unterseite der zweiten Substratschicht Laminieren der Unterseite der ersten Substratschicht an die Oberfläche der thermisch leitfähigen Schicht; Formen einer Mehrzahl von durchkontaktierten Löchern, die sich von der Oberseite der ersten Substratschicht zu der elektrischen Schicht auf der Unterseite der zweiten Substratschicht erstrecken; Anordnen eines integrierten Schaltkreisbausteins in einer der Vertiefungen, mit welchem Kontaktfelder in Verbindung stehen, wobei die integrierten Schaltkreisbausteine an der offenen Oberfläche der thermisch leitfähigen Schicht haftet, wobei die Oberseiten der Schaltkreisbausteine im wesentlichen koplanar mit der Oberfläche dem ersten Substrat; Anordnen eines dünnen Polymerfilms über der Oberseite der ersten Substratschicht und der integrierten Schaltkreisbausteine; Formen einer Mehrzahl von Öffnungen, die an zumindest einigen der Kontaktfelder und der durchkontaktierten Löcher ausgerichtet sind; Formen eines Musters von Verbundleitern auf der Oberseite des Polymerfilms, die sich zwischen zumindest einigen der Öffnungen erstrecken und elektrische Verbindungen zwischen zumindest einigen der Kontaktfelder und der durchkontaktierten Löcher bereitstellen

Bei dieser Baugruppe sind die Durchkontaktierungen für die elektrischen Verbindungen und die Fläche für einen Kühlkörper mit der Konsequenz einer wesentlich vergrößerten Substratfläche flächenhaft nebeneinander angeordnet.

Des Weiteren ist aus DE 199 58 486 A1 ein Verfahren zum Verbinden zweier Halbleiter-Bauelemente bekannt, welches die Schritte umfasst: Bereitstellen von ersten Bauelementstrukturen in einer ersten Hauptoberfläche eines ersten Halbleiter-Substrats mit ersten Kontaktbereichen; Ausbilden von mit elektrisch leitendem Material gefüllten Kontaktlöchern in dem ersten Halbleiter-Substrat, welche gegenüber dem ersten Halbleiter-Substrat elektrisch isoliert sind, sich bis zur zweiten Hauptoberfläche des ersten Halbleiter- Substrats erstrecken und überein elektrisch leitendes Verbindungsmaterial auf der ersten Hauptoberfläche des ersten Halbleiter-Substrats mit den ersten Kontaktbereichen elektrisch leitend verbunden sind; Ausbilden von ersten Kontaktflächen auf der zweiten Hauptoberfläche des ersten Halbleiter-Substrats, die über das elektrisch leitende Material in den Kontaktlöchern mit den ersten Kontaktbereichen elektrisch leitend verbunden sind; Bereitstellen von zweiten Bauelementstrukturen mit zweiten Kontaktbereichen auf einem zweiten Halbleiter-Substrat; Ausbilden von zweiten Kontaktflächen, die mit den zweiten Kontaktbereichen elektrisch leitend verbunden sind; Verbinden von erstem und zweiten Halbleiter-Substrat, so dass sowohl die elektrische als auch die mechanische Verbindung der beiden Substrate über die ersten und zweiten Kontaktflächen erfolgt.

Mit dieser Art der Rückkontaktierung ist es zwar möglich, die Anschlusskontakte abseits der Oberseite eines Halbleiter-Bauelements anzuordnen, ein elektrischer Sensor ist dort jedoch nicht vorgesehen.

In DE 102 05 026 C 1 ist ein Halbleitersubstrat angegeben, bei dem auf der Vorderseite eine Leiterbahn erläuft, die von der Rückseite des Halbleitersubstrats kontaktierbar ist, wozu in das Halbleitersubstrat Isoliergraben eingearbeitet sind, durch die Kontaktierungselemente geführt werden.

Des Weiteren ist in EP 0 174 712 A eine Halbleiteranordnung beschrieben, bei der elektrische Leiter von der Oberseite zur Unterseite geführt werden.

Ferner sind in FR 2 829 626 A und US 6 756 304 B 1 Anordnungen beschrieben, mit denen elektronische Bauteile mit Hilfe von elektrischen Leitern auf der Unterseite von Substraten kontaktiert werden können.

Aus US 2002/074637 A1 ist eine Anordnung bekannt, bei der ein Stapel von elektrischen Leiterplatten in Flip-Chip-Technik verbunden werden, wobei mit elektrischen Leitern eine leitende Verbindung zwischen verschiedenen Ebenen hergestellt wird, wobei elektrische Leiter an den Seitenflächen der Leiterplatten verlaufen.

Der Erfindung liegt die Aufgabe zugrunde, die bekannten Vorrichtungen derart zu verändern, dass sie an ihrer Unterseite auf einer Unterlage montierbar sind, ohne die Anschlusskontakte zu beeinträchtigen.

Die Aufgabe wird erfindungsgemäß gelöst durch eine Vorrichtung, welche die in Anspruch 1 angegebenen Merkmale aufweist.

Vorteilhafte Ausgestaltungen der Erfindung sind Gegenstand der Unteransprüche.

Die Erfindung sieht vor, dass die Leitungen durch das Substrat hindurch im wesentlichen parallel zur Normalen der Oberfläche zu Anschlusskontakten führen, die von der Oberfläche beabstandet sind. Die Anschlusskontakte sind somit abseits der dem Fluid ausgesetzten Oberseite der Vorrichtung angeordnet, wodurch sie vor Kontakt mit dem Fluid und damit vor Kondensation und Korrosion geschützt sind. Je nach Anordnung der Anschlusskontakte ist das Substrat in den übrigen Bereichen mit einem oder mehreren Kühl- und/oder Heizelementen kontaktierbar, wodurch die Vorrichtung und insbesondere der Sensor temperierbar sind.

Vorzugsweise sind die Anschlusskontakte an mindestens einer Seitenfläche des Substrats angeordnet. Auf diese Weise ist die Vorrichtung an ihrer Unterseite auf einer Unterlage montierbar. Eine aufwendige Rückseitenkontaktierung ist nicht erforderlich.

In einer bevorzugten Ausführungsform sind die Anschlusskontakte von demjenigen Rand der Seitenfläche, welcher von der Oberfläche des Substrats abgewandt ist, beabstandet angeordnet. Dadurch werden die elektrischen Anschlusskontakte nicht von der Unterlage beeinträchtigt oder gar beschädigt.

Zweckmäßigerweise ist die Seitenfläche orthogonal zur Oberfläche des Substrats ausgerichtet. Dies ermöglicht eine kompakte Form der Vorrichtung.

Vorzugsweise sind die Leitungen als Leiterbahnen ausgebildet, wodurch sie kostengünstig und zuverlässig herstellbar sind.

Eine bevorzugte Ausgestaltung sieht vor, dass das Substrat eine hohe Wärmeleitfähigkeit aufweist. Auf diesem Wege ist ein schnelles und zuverlässiges Temperieren des Sensors bei geringem Energieaufwand möglich.

In einer weitergehenden Ausgestaltung ist das Substrat ein elektrischer Isolator. Dadurch ist keine zusätzliche Isolierung der Leitungen gegenüber dem Substrat erforderlich.

Vorteilhafterweise ist auf der von der Oberfläche abgewandten Seite des Substrats ein Heiz- und/oder Kühlelement in innigem Kontakt mit dem Substrat angeordnet. Dadurch gelingt mit einem einzelnen, an der Unterseite des Substrats angeordneten Kühl- und/oder Heizelement ein symmetrisches Heizen beziehungsweise Kühlen der Vorrichtung zuverlässig.

Eine alternative Ausgestaltung sieht vor, dass auf der von der Oberfläche abgewandten Seite des Substrats ein weiteres Substrat in innigem Kontakt mit dem Substrat angeordnet ist. Dadurch ist die Vorrichtung zuverlässig und symmetrisch auf die Temperatur des zweiten Substrats temperierbar.

In einer weiteren alternativen Ausgestaltung steht der Sensor in direktem Kontakt zu einem Heiz- und/oder Kühlelement oder zu einer Heatpipe. In dieser Ausgestaltung wird der Wärmetransport durch das Substrat vermieden.

Vorzugsweise ist der Sensor als ein Transducer ausgebildet, insbesondere zur Impedanzmessung. Auf diese Weise ist die Feuchte des Fluids kostengünstig und genau bestimmbar.

In einer bevorzugten Ausführungsform ist im Bereich der Seitenflächen des Substrats eine thermische Isolierung angebracht. Dadurch ist das seitlich befindliche Fluid und die weitere Umgebung der Vorrichtung vor einer Beeinflussung durch eine unterschiedliche Temperatur der Vorrichtung geschützt.

Zweckmäßigerweise sind dabei die Anschlusskontakte durch die thermische Isolierung hindurchgeführt. Die Isolierung wird so durch die Anschlusskontakte nur stellenweise unterbrochen.

In einer vorteilhaften Ausgestaltung weist der Sensor eine sensitive Fläche auf, wobei die thermische Isolierung von der sensitiven Fläche beabstandet ist. Ein solcher Absatz erleichtert das Beseitigen von Verunreinigungen der sensitiven Fläche, insbesondere das Abwischen derselben.

Die Erfindung wird im Folgenden anhand eines Ausführungsbeispiels erläutert.

Dazu zeigen:
- Figur 1: eine schematische Darstellung einer Vorrichtung zur Feuchtemessung im vertikalen Querschnitt,
- Figur 2: eine schematische Darstellung einer Vorrichtung zur Feuchtemessung auf einem weiteren Substrat im vertikalen Querschnitt,
- Figur 3: eine schematische Darstellung einer Vorrichtung zur Feuchtemessung mit von der Unterseite beabstandeten Anschlusskontakten im vertikalen Querschnitt,
- Figur 4: eine schematische Darstellung einer Vorrichtung zur Feuchtemessung auf einem Kühl-/Heizelement im vertikalen Querschnitt.

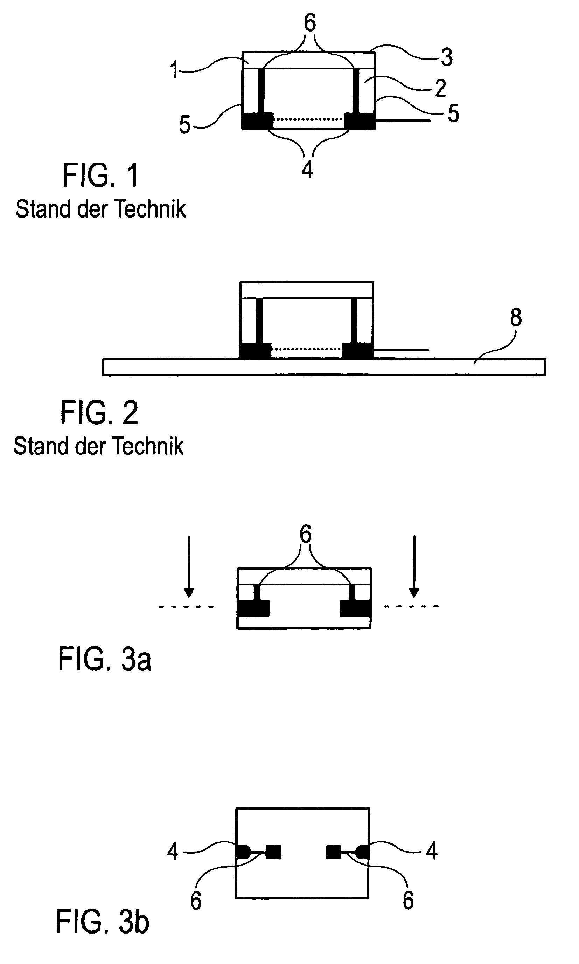

**Figur 1** zeigt eine aus dem Stand der Technik bekannte Vorrichtung zur Messung der Feuchte eines Fluids, dem die Oberfläche 3 der Vorrichtung zu diesem Zweck ausgesetzt wird. Dort ist beispielsweise ein Streufeldkondensator, der eine sensitive Fläche aufweist, als Sensor 1 auf die Oberseite eines Substrats 2 aufgebracht. Mittels dieser sensitiven Fläche wird die Feuchte des umgebenden Messmediums oder Fluids kapazitiv ermittelt. Die Oberfläche 2 weist keinerlei elektrische Anschlusskontakte 4 auf. Diese befinden sich von der Oberfläche 3 beabstandet an der Unterseite des Substrats 2 an den Seitenflächen 5 des Substrats 2, die senkrecht zur Oberfläche 2 der Vorrichtung ausgerichtet sind. Die Anschlusskontakte 4 sind auf einer Seite herausgeführt. Sie sind über als Leiterbahnen ausgeführte Leitungen 6 mit Kontakten des Sensors 1 verbunden. Die Anschlusskontakte 4 sind gegeneinander und gegenüber dem Substrat 2 elektrisch isoliert. Dasselbe gilt für die Leitungen 6, die parallel zur Flächennormalen der Oberfläche 3 verlaufen.

Anstelle eines Streufeldkondensators ist jeder elektrisch arbeitende Sensor einsetzbar, auch zur Messung beliebiger anderer Parameter von Fluiden.

Beispielsweise sind Sensorsysteme verwendbar, bei denen es zu einem Gleichgewichtszustand der Partialdrücke außerhalb und innerhalb von sensitiven Schichten kommen soll, wobei die sensitiven Schichten durch Kühlen oder Heizen über die Rückseite eine bestimmte vorgegebene Temperatur annehmen soll. Diese werden in der erfindungsgemäßen Anordnung technologisch und funktionell entkoppelt von der elektrischen Kontaktierung des Transducers und der thermischen Kontaktierung zu Heiz- und/oder Kühlelementen 7 und weiteren auf die Kondensationsfläche temperaturseitig durchgreifenden Übergängen. Speziell bei impedanzbasierte Sensorsystemen gelingt bei der Systemkomponente "Transducer" mit dessen Schnittstellen zum Erkennungssystem und zur Signalvorverarbeitung deren physische Entkopplung. Andererseits bietet die erfindungsgemäße Vorrichtung einen sehr guten thermischen Durchgriff von der Rückseite zur Vorderseite.

Die Lösung der genannten Probleme erfolgt erfindungsgemäß damit, dass sich unterhalb der dem Messmedium oder Fluid ausgesetzten Sensoroberfläche sowohl die elektrischen als auch thermischen Leitungen 6 befinden, dass sich auf der Rückseite der Vorrichtung sowohl die elektrischen Anschlusskontakte 4, beispielsweise für Temperaturmessungen und/oder Impedanzmessungen und/oder dergleichen, als auch die funktiongemäß erforderliche thermische Kontaktierung zu Kühl-/Heizelementen 7 und/oder Kühl-/Heizsubstraten realisiert wird.

**Figur 2** zeigt eine bekannte Vorrichtung, bei der an der Unterseite des Substrats 2 ein zweites Substrat 8 in innigem Kontakt mit dem Substrat 2 angeordnet ist. Das Substrat 2 besteht in diesem Beispiel aus Material mit hoher Wärmeleitfähigkeit und hoher elektrischer Isolierwirkung. Das zweite Substrat 8 dient der Temperierung der Oberfläche des Sensors 1 und kann beispielsweise eine Leiterplatte, ein Bauelement, ein Rohr oder eine Kältedecke sein.

In **Figur 3** ist in den Teilfiguren 3a und 3b eine Vorrichtung dargestellt, bei der die Anschlusskontakte 4 zwischen Ober- und Unterseite an den Seitenflächen 5 des Substrats 2 angeordnet sind. Teilfigur 3b zeigt einen Querschnitt der Teilfigur 3a. Deutlich erkennbar ist der Verlauf der Leitungen 6 zu den an am Rand des Substrats 2 gelegenen Anschlusskontakten 4 erkennbar.

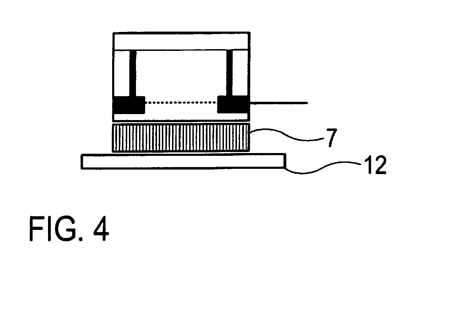

**Figur 4** zeigt eine Vorrichtung mit zwischen Ober- und Unterseite des Substrats 2 angeordneten Anschlusskontakten 4, bei der an der Unterseite des Substrats 2 ein Kühl-/Heizelement 7 in innigem Kontakt angeordnet ist. Dieses Heiz- und Kühlelement 7 kann auch mehrteilig sein und/oder im Bereich der Seitenflächen des Substrats 2 direkt thermisch angekoppelt werden, um die Vorrichtung einschließlich des Sensors 1 durch Wärmeleitung über das Substrat 2 zu temperieren. Das Substrat 2 besteht in diesem Beispiel aus Material mit hoher Wärmeleitfähigkeit. Die Leitungen 6 und Anschlusskontakte 4 sind beispielhaft mit einer elektrisch isolierenden Schicht umgeben. Das Heiz- und Kühlelement 7ist an seiner Unterseite mit einem Kühlkörper versehen.

Es ist auch möglich, dass an den seitlichen Außenflächen eine thermische Isolierung in Form einer Dämmschicht angebracht ist. Vorteilhaft ist dabei, dass die Isolierung einen Absatz unterhalb der Oberfläche 3 des Sensors 1 aufweist, so dass Verunreinigungen von dieser Oberfläche 3, die die sensitive Schicht des Sensors 1 bildet, leicht beseitigt werden können. Die Messgenauigkeit der Vorrichtung kann dadurch erhöht werden.

### BEZUGSZEICHENLISTE

- 1: Sensor
- 2: Substrat
- 3: Oberfläche
- 4: Anschlusskontakt
- 5: Seitenfläche
- 6: Leitung
- 7: Heiz- und/oder Kühlelement
- 8: Zweites Substrat

## Patentansprüche

1. Vorrichtung zur Messung eines Parameters eines Fluids, wobei ein elektrischer Sensor (1) auf einer Oberfläche eines Substrats (2) angeordnet und mit hinter der Oberfläche des Substrats (2) angeordneten, elektrisch voneinander isolierten Leitungen (6) kontaktiert ist, welche durch das Substrat (2) hindurch im wesentlichen parallel zur Normalen der Oberfläche zu Anschlusskontakten (4) führen, die von der Oberfläche beabstandet sind, **dadurch gekennzeichnet, dass** die Anschlusskontakte (4) an mindestens einer Seitenfläche (5) des Substrats (2) angeordnet sind und die Seitenfläche (5) orthogonal zur Oberfläche des Substrats (2) ausgerichtet ist, wobei die Anschlusskontakte (4) von demjenigen Rand der Seitenfläche (5), welcher von der Oberfläche des Substrats (2) abgewandt ist, beabstandet angeordnet sind.

2. Vorrichtung nach Anspruch 1, **dadurch gekennzeichnet, dass** die Leitungen (6) als Leiterbahnen ausgebildet sind.

3. Vorrichtung nach einem der Ansprüche 1 oder 2, **dadurch gekennzeichnet, dass** das Substrat (2) ein elektrischer Isolator ist.

4. Vorrichtung nach einem der vorhergehenden Ansprüche, **dadurch gekennzeichnet, dass** der Sensor (1) als ein Transducer ausgebildet ist.

5. Vorrichtung nach einem der vorhergehenden Ansprüche, **dadurch gekennzeichnet, dass** im Bereich der Seitenflächen (5) des Substrats (2) eine thermische Isolierung angebracht ist.

6. Vorrichtung nach Anspruch 5, **dadurch gekennzeichnet, dass** der Sensor (1) eine sensitive Fläche aufweist, wobei die thermische Isolierung von der sensitiven Fläche beabstandet ist.

## Claims

1. Apparatus for measuring a parameter of a fluid, wherein an electrical sensor (1) is arranged on a surface of a substrate (2) and contacting with conductors (6) which are arranged behind the surface of the substrate (2), which are electrically insulated from one another and which lead through the substrate (2) essentially in parallel to the normal of the surface to connecting contacts (4) that are positioned at a distance from the surface, **characterized in that** the connecting contacts (4) are arranged on at least one side surface (5) of the substrate (2) and the side surface (5) is aligned orthogonally to the surface of the substrate (2) wherein the connecting contacts (4) are arranged at a distance from the edge of the side surface (5) which is facing away from the surface of the substrate (2).

2. Apparatus as claimed in claim 1, **characterized in that** the conductors (6) are designed as circuit-board conductors.

3. Apparatus as claimed in any claim 1 or 2, **characterized in that** the substrate (2) is an electrical insulator.

4. Apparatus as claimed in any preceding claim, **characterized in that** the sensor (1) is designed as a transducer.

5. Apparatus as claimed in any preceding claim, **characterized in that** a thermal insulation is attached in the area of the side surfaces (5) of the substrate (2).

6. Apparatus as claimed in claim 5, **characterized in that** the sensor (1) presents a sensitive area wherein the thermal insulation is arranged at a distance from the sensitive area.

## Revendications

1. Dispositif pour la mesure d'un paramètre d'un fluide, où un capteur électrique (1) est disposé sur une surface d'un substrat (2) et est en contact avec des conducteurs (6) disposés en arrière de la surface du substrat (2) et isolés électriquement les uns des autres, lesquels conduisent à des contacts de connexion (4) espacés de la surface, en traversant le substrat (2) sensiblement parallèlement à la normale de la surface, **caractérisé en ce que** les contacts de connexion (4) sont disposés sur au moins une surface latérale (5) du substrat (2), et **en ce que** la surface latérale (5) est orthogonale à la surface du substrat (2), les contacts de connexion (4) étant disposés à intervalle du bord de la surface latérale (5) qui est distant de la surface du substrat (2).

2. Dispositif selon la revendication 1, **caractérisé en ce que** les conducteurs (6) sont réalisés sous forme de pistes conductrices.

3. Dispositif selon la revendication 1 ou la revendication 2, **caractérisé en ce que** le substrat (2) est un isolant électrique

4. Dispositif selon l'une des revendications précédentes, **caractérisé en ce que** le capteur (1) est réalisé sous forme de transducteur.

5. Dispositif selon l'une des revendications précédentes, **caractérisé en ce qu'**une isolation thermique (9) est disposée au niveau des surfaces latérales (5) du substrat (2).

6. Dispositif selon la revendication 5, **caractérisé en ce que** le capteur (1) présente une face sensible, l'isolation thermique (9) étant espacée de la face sensible.
